# DEMANDE DE BREVET EUROPEEN

(11) **EP 4 574 624 A1**
(43) Date de publication de la demande: **25.06.2025**
(21) Numéro de dépôt: 24220560.7
(22) Date de dépôt: 17.12.2024
(51) Int. Cl.: B61L 23/04, G06V 20/56

(54) **SYSTÈME ET PROCÉDÉ DE DÉTECTION ET DE LECTURE AUTOMATIQUE DES PANNEAUX DE SIGNALISATION D'UNE VOIE FERRÉE**

(30) Priorité: 18.12.2023 FR 2314394
(71) Demandeur: Société Nationale SNCF, 93200 Saint Denis (FR)
(72) Inventeur: BOUNEDJAR, Temmy, 92120 Montrouge (FR); DAVID, Philippe, 27460 Alizay (FR); AMMAD, Nadia, 75012 Paris (FR); BRAQUEHAYS, Pierre, 94200 Ivry-sur-Seine (FR)
(74) Mandataire: Bringer IP

(57) **Abrégé**

L'invention concerne un système et procédé de détection et de lecture automatique des panneaux de signalisation d'une voie ferroviaire comprenant : une étape (E1) d'acquisition d'un nuage de points 3D de l'environnement de la voie ; une étape concomitante (E2) d'acquisition d'une image de l'environnement de ladite voie ; une étape (E3) de partitionnement dudit nuage de points 3D acquis en une pluralité de tranches ; une étape (E4) de projection orthogonale des points de chaque tranche ; une étape (E6) de comparaison dudit nuage de points 2D projetés à une pluralité de formes de panneaux prédéterminés ; une étape (E7) de sélection d'un panneau, dit panneau reconnu, choisi parmi ladite pluralité de panneaux prédéterminés ; une étape (E8) de détection, sur ladite image acquise correspondant audit nuage de points 3D dont dérive le nuage de points 2D correspondant audit panneau reconnu, de l'information lumineuse fournie par ledit panneau reconnu.

## Description

### Domaine technique de l'invention

L'invention concerne un système et un procédé de détection et de lecture automatique des panneaux de signalisation agencés au voisinage d'une voie de circulation d'un véhicule ferroviaire. L'invention s'étend à un véhicule ferroviaire équipé d'un tel système de détection et de lecture automatique des panneaux de signalisation. L'invention s'étend aussi à un drone équipé d'un tel système de détection et de lecture automatique des panneaux de signalisation ferroviaire.

### Arrière-plan technologique

La circulation d'un véhicule ferroviaire sur une voie de circulation est contrainte et sécurisée par la présence d'un certain nombre de panneaux agencés le long de la voie et destinés à fournir des informations de circulation au conducteur du train. Ces signaux sont en général des signaux lumineux qui autorisent ou non le passage du train, en fonction du trafic ferroviaire sur la portion de voie que le train s'apprête à emprunter. Ces panneaux sont agencés au voisinage de la voie de circulation, et notamment sur les bords latéraux de la voie de circulation ou sur des portiques qui surplombent la voie. Ces panneaux sont lus et interprétés par le conducteur du train.

Dans un objectif de déployer un train autonome, il est nécessaire d'équiper les trains d'un moyen d'accès aux informations de circulation et notamment aux panneaux de signalisation, en particulier pour les trains autonomes destinés à circuler sur des voies non compatibles avec le système européen connu sous l'acronyme ETCS pour *European Train Control System.* Ce système est destiné à terme à remplacer la signalisation des voies de circulation, ce qui doit permettre aux trains d'accéder directement aux informations de signalisation. Cela étant, certaines portions de voie ne seront pas compatibles rapidement avec ce système ETCS de telle sorte qu'il existe un besoin de proposer un système et un procédé de détection et de lecture automatique des panneaux de signalisation actuellement agencés le long des voies.

L'une des solutions déjà proposées est de disposer d'une cartographie précise de l'implantation des panneaux de signalisation le long des voies et de géolocaliser précisément le train. Ainsi, lorsque le train approche d'une zone de présence d'un panneau de signalisation, une caméra embarquée à bord du train est activée pour faire l'acquisition du panneau de signalisation latérale. Un module de traitement d'images peut alors analyser l'image acquise pour en déduire l'information de signalisation émise par le panneau. L'un des inconvénients de cette solution est d'une part de devoir constituer au préalable une cartographie de l'ensemble des panneaux de signalisation ferroviaire et d'autre part de nécessiter une grande précision de cette cartographie. En outre, la localisation du train doit être aussi précise que la localisation des panneaux sous peine que la caméra embarquée sur le train se déclenche trop tôt ou trop tard et rate le panneau et ne puisse dès lors pas accéder à l'information de signalisation.

Les inventeurs ont donc cherché à proposer une solution alternative de détection et de lecture automatique des informations de signalisation d'une voie de circulation ferroviaire.

### Objectifs de l'invention

L'invention vise à fournir un système et un procédé de détection et de lecture automatique des panneaux de signalisation d'une voie ferrée.

L'invention vise aussi à fournir, dans au moins un mode de réalisation, un procédé et un système de détection et de lecture automatique des panneaux de signalisation qui ne nécessitent aucune connaissance préalable de la cartographie de la voie ferrée.

L'invention vise aussi à fournir, dans au moins un mode de réalisation, un procédé et un système de détection et de lecture automatique des panneaux de signalisation qui ne nécessitent pas d'accéder à une localisation absolue du train sur la voie ferrée.

L'invention vise aussi à fournir, dans au moins un mode de réalisation, un procédé et un système de détection et de lecture automatique des panneaux de signalisation qui puissent être entièrement mis en oeuvre à bord du train, sans accès à un serveur extérieur.

L'invention vise aussi à fournir, dans au moins un mode de réalisation, un procédé et un système de détection et de lecture automatique des panneaux de signalisation qui puissent être certifiés pour une utilisation à bord des trains autonomes.

L'invention vise aussi à fournir, dans au moins un mode de réalisation, un tel système et procédé de détection et de lecture automatique des panneaux de signalisation qui ne nécessitent pas la mise en oeuvre de routines d'intelligence artificielle.

### Exposé de l'invention

Pour ce faire, l'invention concerne un procédé de détection et de lecture automatique des panneaux de signalisation d'une voie ferrée comprenant :
- une étape d'acquisition d'un nuage de points 3D de l'environnement de la voie à partir d'un capteur 3D monté sur un véhicule ferroviaire circulant sur ladite voie et orienté vers l'environnement de la voie susceptible de loger des panneaux de signalisation,
- une étape concomitante d'acquisition d'une image dudit environnement de ladite voie ferroviaire à partir d'un capteur optique embarqué sur ledit véhicule ferroviaire circulant sur ladite voie et orienté vers l'environnement de la voie susceptible de loger des panneaux de signalisation,
- une étape de partitionnement dudit nuage de points 3D acquis par le capteur 3D en une pluralité de tranches 3D s'étendant chacune perpendiculaire à la voie,
- une étape de projection orthogonale des points de chaque tranche 3D sur un plan perpendiculaire à la voie de manière à obtenir un nuage de points 2D dudit environnement de la voie,
- une étape de comparaison dudit nuage de points 2D à une pluralité de formes de panneaux prédéterminés,
- une étape de sélection d'un panneau, dit panneau reconnu, choisi parmi ladite pluralité de panneaux prédéterminés à partir des résultats de l'étape de comparaison,
- une étape de détection, sur ladite image acquise par ledit capteur optique correspondant audit nuage de points 3D dont dérive le nuage de points 2D correspondant audit panneau reconnu, de l'information lumineuse fournie par ledit panneau reconnu.

Le procédé selon l'invention présente donc la particularité de faire l'acquisition de l'environnement de la voie à la fois par un capteur 3D, tel qu'un capteur actif du type lidar, radar, télémètre ou un capteur passif du type système stéréoscopique, et par un capteur optique tel qu'une caméra optique. Le capteur 3D et le capteur optique font l'acquisition en simultané de la même zone de l'environnement de la voie.

Le capteur 3D fournit ainsi un nuage de points 3D de l'environnement de la voie qui constitue une empreinte 3D de l'environnement du train. Ce nuage de points 3D est projeté par tranches en des nuages de points 2D sur des plans perpendiculaires à la voie. Le nuage de points 2D est ensuite comparé à une pluralité de formes prédéterminées de manière à pouvoir déterminer, le cas échéant, le type de panneau imagé par le capteur 3D.

Avantageusement et selon une variante de l'invention, chaque nuage de points 2D est transformé en une forme 2D continue et cette forme 2D continue est comparée à la pluralité de formes prédéterminées de manière à pouvoir déterminer, le cas échéant, le type de panneau imagé par le capteur 3D.

En d'autres termes et selon cette variante, le procédé comprend après l'étape de projection orthogonale des points de chaque tranche permettant d'obtenir un nuage de points 2D dudit environnement de la voie, une étape de constitution d'une forme 2D continue dudit environnement à partir de chaque nuage de points 2D projetés, et ladite étape de comparaison dudit nuage de points 2D à une pluralité de formes de panneaux prédéterminés consiste à comparer ladite forme 2D continue à ladite pluralité de formes de panneaux prédéterminés.

Selon l'invention, les panneaux agencés aux bords de la voie présentent différentes formes, mais la pluralité des formes est connue. Ces panneaux de signalisation contiennent chacun une ou plusieurs informations identificatrices de l'instruction de conduite à adopter. Toutes ces informations sont détectables par le procédé selon l'invention. Aussi, le procédé selon l'invention tire avantageusement profit de cette connaissance préalable de la forme des panneaux qui peuvent être présents aux abords des voies en détectant des formes 2D dans les données fournies par le capteur 3D et en comparant ces formes aux formes prédéterminées connues des panneaux de signalisation. Cette comparaison permet de classer et de reconnaitre le panneau imagé par le capteur 3D.

Une fois le panneau reconnu, l'information lumineuse fournie par le panneau est déterminée par l'analyse de l'image optique acquise par le capteur optique simultanément aux données 3D issues du capteur 3D.

Cette information peut ensuite être utilisée par le véhicule pour adapter sa conduite. En d'autres termes, l'information détectée par le procédé selon l'invention permet de fournir des instructions de conduite à adopter par le véhicule.

Le procédé selon l'invention met ainsi en oeuvre des routines algorithmiques qui peuvent être dénuées de routines d'intelligence artificielle, ce qui ouvre la voie à la certification d'une telle solution. Cela étant, dans d'autres modes de réalisation, des solutions à base d'intelligence artificielle pourraient être mises en oeuvre.

En particulier, le procédé selon l'invention fait de la reconnaissance de formes 2D dérivées des données 3D acquises par le capteur 3D et la forme 2D reconnue peut ensuite être vérifiée par l'analyse des données 3D pour les comparer aux dimensions connues du panneau de référence.

L'invention permet donc, en résumé, de détecter et d'identifier en temps réel un panneau agencé aux abords d'une voie (bords latéraux ou portiques surplombant la voie) et de détecter la zone d'intérêt au sein d'une image de manière à lire l'information lumineuse du panneau. A noter cependant que dans d'autres modes de réalisation et pour des applications spécifiques (comme par exemple la vérification de l'intégrité des panneaux de signalisation d'une voie) l'analyse des données acquises pourraient se faire de manière différée et non en temps réel.

Le procédé selon l'invention peut avantageusement mesurer, au cours de l'étape de sélection du panneau reconnu, les dimensions du panneau reconnu par une analyse du nuage de points 3D fourni par le capteur 3D de manière à confirmer le panneau reconnu. En particulier, la comparaison des formes 2D permet de former une hypothèse de détection par une simple détection de contour et l'analyse des points 3D permet de confirmer que la forme 2D détectée correspond bien à un des panneaux de la liste prédéterminée de panneaux détectables aux abords de la voie.

Selon un mode de réalisation, le procédé selon l'invention peut aussi, en parallèle ou suite à cette lecture des informations lumineuses des panneaux de signalisation, procéder au traitement des autres informations (par exemple les pancartes) qui peuvent être interprétées par les capteurs actifs. Un mode particulier de réalisation consiste dans la lecture des inscriptions sur les pancartes par Lidar.

Le procédé selon l'invention peut avantageusement minimiser, au cours de l'étape de sélection, une fonction de différence entre chaque forme 2D dérivée du nuage de points 3D et lesdites formes prédéterminées de panneaux.

Cette variante avantageuse permet d'obtenir une liste ordonnée des panneaux potentiellement reconnus dans le nuage de points 3D.

Le procédé selon l'invention peut avantageusement mesurer, au cours de l'étape de sélection, les dimensions du panneau reconnu par un retraitement des données 3D issues du capteur 3D de manière à confirmer ou non la reconnaissance dudit panneau.

Cette variante permet de confirmer ou d'infirmer la reconnaissance du panneau par un retour aux données 3D issues du capteur 3D. Ainsi, l'algorithme de détection qui s'appuie sur une reconnaissance de formes est confirmé par une mesure physique de l'objet normé.

Le procédé selon l'invention peut avantageusement comprendre, au cours de l'étape de sélection, le calcul d'une distance, au sens mathématique du terme, entre la forme reconnue et la forme la plus proche suivante et une étape de comparaison de cette distance à un seuil prédéterminé.

L'invention s'étend à un système de détection et de lecture automatique des panneaux de signalisation d'une voie ferrée comprenant :
- un capteur 3D (par exemple un capteur actif du type lidar ou radar ou un capteur passif du type système stéréoscopique) destiné à être monté sur un véhicule ferroviaire circulant sur ladite voie et configuré pour faire l'acquisition d'un nuage de points 3D de l'environnement de la voie susceptible de loger des panneaux de signalisation,
- un capteur optique, tel qu'une caméra, destiné à être monté sur un véhicule ferroviaire et configuré pour faire l'acquisition d'une image dudit environnement de ladite voie ferrée susceptible de loger des panneaux de signalisation,
- un module de partitionnement dudit nuage de points 3D acquis par ledit capteur 3D en une pluralité de tranches s'étendant chacune perpendiculairement à la voie,
- un module de projection orthogonale des points de chaque tranche sur un plan perpendiculaire à la voie de manière à obtenir un nuage de points 2D dudit environnement de la voie,
- un module de comparaison dudit nuage de points 2D à une pluralité de formes de panneaux prédéterminés,
- un module de sélection d'un panneau, dit panneau reconnu, choisi parmi ladite pluralité de panneaux prédéterminés à partir des résultats de l'étape de comparaison,
- un module de détection, sur ladite image acquise par le capteur optique et correspondant audit nuage de points 3D dont dérive le nuage de points 2D correspondant audit panneau sélectionné, de l'information lumineuse fournie par ledit panneau détecté.

Les avantages et effets techniques du procédé selon l'invention s'appliquent *mutatis mutandis* au système selon l'invention.

Le capteur 3D et le capteur optique peuvent être montés à l'extérieur du train ou à l'intérieur de la rame. Le capteur 3D et le capteur optique sont montés de telle sorte qu'ils puissent imager la même zone de l'environnement du train. En général, les panneaux sont agencés à gauche de la voie. Aussi, les capteurs sont de préférence agencés à gauche. Il existe cependant certaines voies où les panneaux sont agencés à droite de la voie ou sur des portiques qui surplombent la voie. Le cas échéant, des capteurs sont également agencés à droite du train ou vers l'avant du train pour pouvoir faire l'acquisition de cet environnement. Il est également possible de prévoir des capteurs à gauche et/ou à droite du train et/ou vers l'avant, orientés de manière à pouvoir faire l'acquisition simultanée des environnements latéraux des deux côtés du train et vers l'avant du train pour détecter l'ensemble des panneaux susceptibles de loger des panneaux de signalisation (environnement latéral droit, environnement latéral gauche, portiques surplombant la voie, etc.).

D'une manière générale, la position des différents capteurs est adaptée à l'emplacement connu des panneaux de signalisation (latéral droit, latéral gauche, portique, etc.) en fonction de la voie de circulation empruntée par le train. Le système et procédé selon l'invention peuvent être adaptés à toutes les configurations connues de l'emplacement des panneaux.

Il convient de noter que l'emplacement exact des panneaux le long de la voie n'est pas connu et n'a pas besoin d'être connu pour la mise en oeuvre de l'invention. C'est uniquement la localisation des panneaux dans l'environnement du train qui doit être connu (environnement latéral gauche, environnement latéral droit, environnement sur portique). Si cet environnement de la voie n'est pas connu, alors le système doit comprendre des capteurs orientés dans toutes les directions susceptibles de loger des panneaux).

Dans tout le texte, on désigne par module ou sous-module, un élément logiciel, un sous-ensemble d'un programme logiciel, pouvant être compilé séparément, soit pour une utilisation indépendante, soit pour être assemblé avec d'autres modules d'un programme, ou un élément matériel, ou une combinaison d'un élément matériel et d'un sous-programme logiciel. Un tel élément matériel peut comprendre un circuit intégré propre à une application (plus connu sous l'acronyme ASIC pour la dénomination anglaise *Application-Specific Integrated Circuit*) ou un circuit logique programmable (plus connu sous l'acronyme FPGA pour la dénomination anglaise *Field-Programmable Gate Array)* ou un circuit de microprocesseurs spécialisés (plus connu sous l'acronyme DSP pour la dénomination anglaise *Digital Signal Processor)* ou tout matériel équivalent ou toute combinaison des matériels précités. D'une manière générale, un module ou un sous sous-module est donc un élément (logiciel et/ou matériel) qui permet d'assurer une fonction algorithmique.

Selon une variante avantageuse de l'invention, le système comprend en outre un module de constitution d'une forme 2D continue de l'environnement de la voie à partir de chaque nuage de points 2D projetés et ledit module de comparaison est configuré pour comparer ladite forme 2D continue à ladite pluralité de formes de panneaux prédéterminés,

Avantageusement et selon l'invention, le module de sélection dudit panneau comprend un ou plusieurs des sous-modules suivants :
- un sous-module de minimisation d'une fonction de différence entre chaque forme 2D constituée et lesdites formes prédéterminées,
- un sous-module de mesure des dimensions du panneau reconnu par un retraitement des données 3D issues du capteur 3D de manière à confirmer ou non la reconnaissance dudit panneau,
- un sous-module de calcul d'une distance (au sens mathématique du terme) entre la forme reconnue et la forme la plus proche suivante et un sous-module de comparaison de cette distance à un seuil prédéterminé.

Le système selon l'invention peut aussi être utilisé pour comparer le plan technique d'une voie aux panneaux détectés au cours de la circulation du train, ce qui permet de déterminer si des panneaux ont été ajoutés/retirés ou cassés car non détectés par le système de lecture des signaux. Cette comparaison permet également de déterminer si le procédé s'est trompé par comparaison des détections avec le plan de la voie.

Selon une variante avantageuse de l'invention, le capteur 3D est un capteur actif du type lidar ou radar ou un capteur passif du type système d'imagerie stéréoscopique.

L'avantage d'un capteur actif du type lidar ou radar est qu'il est peu sensible aux conditions atmosphériques de telle sorte que l'acquisition des données de l'environnement de la voie peut se faire quelques soient les conditions climatiques (pluie, neige, brouillard, vent, etc.).

L'invention s'étend aussi à un véhicule ferroviaire destiné à circuler sur une voie ferrée comprenant une pluralité de panneaux de signalisation, caractérisé en ce que le véhicule comprend un système de détection et de lecture automatique des panneaux de signalisation selon l'invention.

Les avantages et effets techniques du procédé et du système selon l'invention s'appliquent *mutatis mutandis* au véhicule selon l'invention.

L'invention concerne également un procédé, un système et un véhicule caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'un véhicule ferroviaire équipé d'un système de détection et de lecture automatique des panneaux de signalisation d'une voie ferrée selon un l'invention,
- la figure 2 est une vue schématique du nuage de points 3D acquis par un capteur 3D du système selon un mode de réalisation de l'invention et son traitement par le système selon l'invention,
- la figure 3 est une vue schématique d'une pluralité de panneaux de signalisation ferroviaire reconnaissables par un système selon l'invention,
- la figure 4 est une vue schématique d'un procédé de détection et de lecture automatique de panneaux de signalisation d'une voie ferrée selon un mode de réalisation de l'invention,
- la figure 5 est une vue schématique d'une unité de traitement d'un système de détection selon un mode de réalisation de l'invention.

### Description détaillée d'un mode de réalisation de l'invention

Sur les figures, les échelles et les proportions ne sont pas strictement respectées et ce, à des fins d'illustration et de clarté.

Les éléments identiques, similaires ou analogues sont désignés par les mêmes références dans toutes les figures.

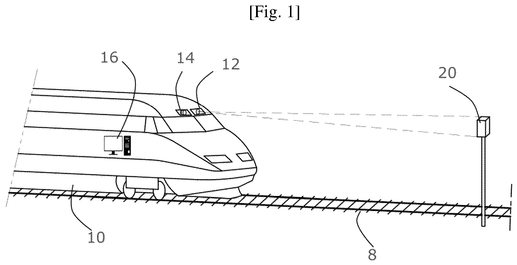

La figure 1 illustre de manière schématique un train 10 circulant sur une voie 8 ferrée, le train 10 embarquant un système de détection et de lecture automatique des panneaux de signalisation selon un mode de réalisation de l'invention. Sur la figure 1, un panneau 20 de signalisation est schématiquement représenté et s'étend dans l'environnement latéral de la voie 8 ferrée.

Le système de détection selon un mode de réalisation de l'invention comprend un lidar 12 (qui forme le capteur 3D) et une caméra 14 (qui forme le capteur optique) montés sur le train et orientés vers l'environnement latéral de la voie susceptible de loger des panneaux de signalisation. Cet environnement latéral de la voie correspond à la zone latérale de la voie 8 au sein de laquelle sont installés les panneaux de signalisation pour cette voie de circulation. Comme indiqué précédemment, le capteur 3D et le capteur optique peuvent être orientés vers une autre zone de l'environnement de la voie en fonction de la connaissance de l'environnement de la localisation de panneaux sur cette voie (à droite, à gauche et/ou sur portique). Selon le mode de réalisation représenté, le lidar 12 et la caméra 14 peuvent faire l'acquisition de données de la zone dans laquelle sont agencés les panneaux de signalisation et notamment le panneau 20.

Le lidar 12 est configuré pour faire l'acquisition d'un nuage de points 3D de l'environnement latéral de la voie et la caméra 14 est configurée pour faire l'acquisition d'une image de ce même environnement latéral de la voie.

Les données acquises par le lidar 12 et par la caméra 14 sont ensuite transmises à une unité de traitement 16, qui est de préférence embarquée sur le train 10. Les transmissions de données du lidar 12 et de la caméra 14 à l'unité de traitement 16 peuvent être de tout type. Il peut s'agir de transmissions filaires ou de transmissions sans-fil quel que soit le protocole de communication.

Les transmissions filaires peuvent indifféremment être formées de réseaux électriques, de réseaux optiques, de réseaux magnétiques et de manière générale de tout type de réseau permettant de transmettre des données.

Les transmissions sans fil peuvent être formées d'un réseau de tous types, sécurisé ou non sécurisé. Un tel réseau sans-fil est par exemple un réseau Wi-Fi (c'est-à-dire suivant la norme IEEE 802.11), mais on comprendra que l'invention s'applique à toute technologie sans fil. On citera notamment d'autres technologies par ondes radio telles que WiMax, le Bluetooth, la 3G, etc.

Le réseau sans fil pourra être sécurisé par une clé de sécurité. Dans le cas d'un réseau Wi-Fi, la sécurisation peut être mise en oeuvre en mettant l'une des solutions connues de l'homme du métier, par exemple la sécurisation WEP, WPA, WPA2, etc.

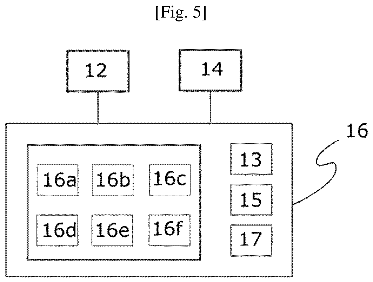

Cette unité de traitement 16, représentée schématiquement sur les figures 1 et 5, comprend par exemple un dispositif informatique qui doit être entendu au sens large (ordinateur, pluralité d'ordinateurs, serveur virtuel, réseaux de serveurs, etc.). Ce dispositif informatique comprend typiquement un ou plusieurs processeurs 15, une ou plusieurs mémoires 17 et une interface homme-machine. L'unité de traitement comprend également une base de données et/ou des moyens de stockage 13 permettant de sauvegarder les résultats du traitement et d'accéder à des informations relatives à des traitements précédents.

L'unité de traitement 16 comprend notamment, et tel que représenté schématiquement sur la figure 5, un module 16a de partitionnement du nuage de points 3D acquis par le lidar 12 en une pluralité de tranches s'étendant chacune dans un plan perpendiculaire à la voie.

L'unité de traitement 16 comprend également un module 16b de projection orthogonale des points de chaque tranche sur un plan perpendiculaire à la voie de manière à obtenir un nuage de points 2D de l'environnement latéral de la voie.

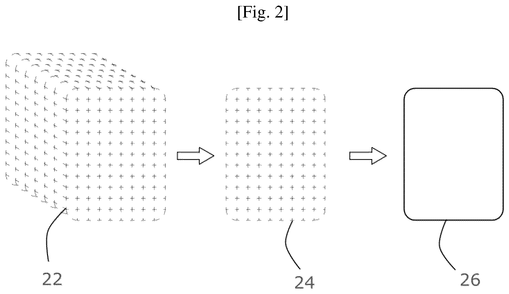

L'unité de traitement 16 comprend également un module 16c de constitution d'une forme 2D continue de l'environnement latéral à partir de chaque nuage de points 2D projetés. La forme 2D continue ainsi obtenue est schématiquement représentée sur la figure 2.

En d'autres termes, les modules 16a, 16b et 16c sont configurés pour fournir un ensemble de formes 2D continues à partir du nuage de points 3D fourni par le lidar 12 monté sur le train.

La figure 2 illustre schématiquement les différentes étapes du traitement du nuage de points 3D par les modules 16a, 16b et 16c. Le nuage de points 3D acquis par le lidar 12 est représenté à gauche de la figure 2 par la référence 22. Ce nuage de points 3D est découpé en tranches, dont une tranche 24 est représentée sur la figure 2. Chaque tranche 24 est ensuite projetée sur un plan orthogonal à la voie pour obtenir une forme continue 26 de la tranche, représentée à droite de la figure 2.

L'unité de traitement 16 comprend également un module de comparaison 16d de chaque forme 26 déterminée par le module 16c à une pluralité de formes de panneaux prédéterminés. En d'autres termes, ce module 16d permet de comparer chaque forme continue dérivée du nuage de points 3D à des formes prédéterminées de panneaux de signalisation latérale.

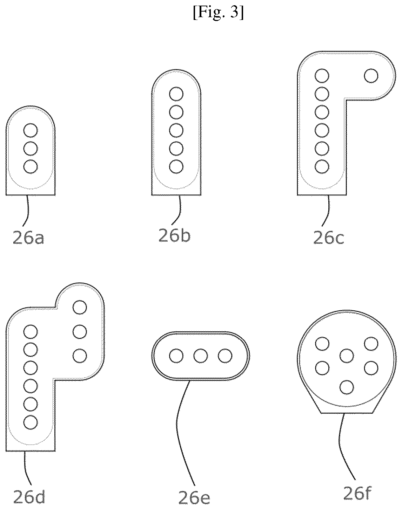

La figure 3 illustre de manière schématique une pluralité de formes 26a, 26b, 26c, 26d, 26e, 26f de panneaux prédéterminés. Bien entendu, l'invention n'est pas limitée aux seules formes illustrées sur la figure 3. Toute forme de panneau utilisé pour la signalisation latérale peut être intégrée à cette liste prédéterminée de panneaux. Cette liste de panneaux prédéterminée et les caractéristiques de chaque panneau sont par exemple sauvegardées dans la mémoire 17 et/ou les moyens de stockage 13 du dispositif informatique logeant l'unité de traitement 16.

L'unité de traitement 16 comprend également un module 16e de sélection d'un panneau, dit panneau reconnu, choisi parmi la pluralité de panneaux prédéterminés en fonction des résultats de la comparaison issus du module 16e.

Ce module de sélection consiste par exemple à sélectionner le panneau dont une mesure de distance, au sens mathématique du terme, par rapport à chaque forme extraite du nuage de points est minimum et inférieure à un seuil prédéterminé. Cette mesure de distance peut être de tout type. En outre, d'autres méthodes de comparaison peuvent être mises en oeuvre pour sélectionner le panneau le plus proche du panneau imagé par le lidar 12.

Enfin, l'unité de traitement 16 comprend un module de détection 16f, sur l'image acquise par la caméra 14 et correspondant au nuage de points 3D dont dérive la forme 2D reconnue, l'information lumineuse fournie par le panneau détecté. Ce module met en oeuvre des routines de traitement d'images et consiste par exemple à faire une détection de contour associée à un seuillage de l'image pour déterminer quel est le feu allumé au sein du panneau et quelle est sa couleur, le cas échéant.

Par exemple, dans l'hypothèse où le panneau reconnu est le panneau 26a représenté sur la figure 3, le module de détection 16f est configuré pour déterminer lequel des trois feux du panneau 26a est allumé, et éventuellement sa couleur, de manière à ce que le train puisse ensuite prendre les mesures de conduite correspondante (arrêt du train, poursuite de la conduite à vitesse normale, ralentissement, etc.). La position des feux de chaque panneau est connue de telle sorte que la routine de traitement d'images permet ensuite, à partir de la connaissance de la forme du panneau, de détecter les zones de localisation des feux. Une routine logicielle détermine ensuite quelle zone du panneau est allumée. Ces routines de traitement d'images sont à la portée immédiate de l'homme du métier et ne sont pas décrites ici en détail.

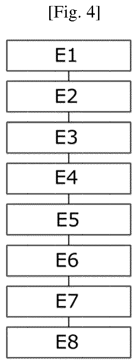

La figure 4 illustre schématiquement un procédé de détection selon un mode de réalisation de l'invention.

Le procédé est mis en oeuvre par le système selon le mode de réalisation représenté comprend les étapes suivantes :
- une étape E1 d'acquisition d'un nuage de points 3D de l'environnement latéral de la voie à partir d'un capteur actif du type lidar ou radar monté sur un véhicule ferroviaire circulant sur ladite voie et orienté vers l'environnement latéral de la voie,
- une étape E2 concomitante d'acquisition d'une image dudit environnement latéral de ladite voie ferroviaire à partir d'une caméra embarquée sur ledit véhicule ferroviaire circulant sur ladite voie et orienté vers l'environnement latéral de la voie,
- une étape E3 de partitionnement dudit nuage de points 3D acquis en une pluralité de tranches s'étendant chacune dans un plan perpendiculaire à la voie,
- une étape E4 de projection orthogonale des points de chaque tranche sur un plan perpendiculaire à la voie de manière à obtenir un nuage de points 2D dudit environnement latéral de la voie,
- une étape E5 de constitution d'une forme 2D continue dudit environnement latéral à partir de chaque nuage de points 2D projetés (comme indiqué précédemment, cette étape est facultative),
- une étape E6 de comparaison de chaque forme 2D ainsi constituée à une pluralité de formes de panneaux prédéterminés (dans le cas où l'étape précédente n'est pas mise en oeuvre, l'étape de comparaison compare directement le nuage de points 2D projetés à la pluralité de panneaux prédéterminés),
- une étape E7 de sélection d'un panneau, dit panneau reconnu, choisi parmi ladite pluralité de panneaux prédéterminés en fonction des résultats de l'étape de comparaison,
- une étape E8 de détection, sur ladite image acquise correspondant audit nuage de points 3D dont dérive la forme 2D constituée correspondant audit panneau reconnu, de l'information lumineuse fournie par ledit panneau reconnu.

L'étape de détection de l'information lumineuse sur le panneau est configurée pour détecter la zone d'intérêt sur l'image susceptible de présenter une information de signalisation.

Chaque étape du procédé selon l'invention est mise en oeuvre par le module correspondant du système de détection selon l'invention.

Un système et un procédé selon l'invention peuvent ainsi utilement équiper un train dans un objectif de le rendre autonome et de pouvoir détecter les consignes de circulation fournies par les panneaux lumineux agencés sur les zones latérales de la voie de circulation du train. Ces panneaux sont initialement destinés à être lus et interprétés par un agent de conduite. Le système selon l'invention permet de les rendre lisibles et interprétables automatiquement par un train autonome, sans modification physique des panneaux.

A noter que les principes de l'invention pourraient également être utilisés dans le cadre de la détection automatique des panneaux de signalisation routière par un véhicule automobile, ou par un aéronef, drone, robot, etc. dans un environnement structuré ou semi-structuré et comprenant des panneaux de signalisation prédéterminés.

## Revendications

1. Procédé de détection et de lecture automatique des panneaux de signalisation d'une voie ferrée comprenant :
- une étape (E1) d'acquisition d'un nuage de points 3D de l'environnement de la voie à partir d'un capteur 3D monté sur un véhicule ferroviaire (10) circulant sur ladite voie et orienté vers l'environnement de la voie susceptible de loger des panneaux de signalisation,
- une étape (E2) concomitante d'acquisition d'une image dudit environnement de ladite voie ferrée à partir d'un capteur optique (14) embarqué sur ledit véhicule ferroviaire (10) circulant sur ladite voie et orienté vers l'environnement de la voie susceptible de loger des panneaux de signalisation,
- une étape (E3) de partitionnement dudit nuage de points 3D acquis en une pluralité de tranches s'étendant chacune dans un plan perpendiculaire à la voie,
- une étape (E4) de projection orthogonale des points de chaque tranche sur un plan perpendiculaire à la voie de manière à obtenir un nuage de points 2D dudit environnement de la voie,
- une étape (E6) de comparaison dudit nuage de points 2D à une pluralité de formes de panneaux prédéterminés,
- une étape (E7) de sélection d'un panneau, dit panneau reconnu, choisi parmi ladite pluralité de panneaux prédéterminés en fonction des résultats de l'étape de comparaison,
- une étape (E8) de détection, sur ladite image acquise par ledit capteur optique et correspondant audit nuage de points 3D dont dérive ledit nuage de points 2D projeté correspondant audit panneau reconnu, de l'information lumineuse fournie par ledit panneau reconnu.

2. Procédé selon la revendication 1, **caractérisé en ce qu'**il comprend en outre, après l'étape (E4) de projection orthogonale des points de chaque tranche permettant d'obtenir un nuage de points 2D dudit environnement de la voie, une étape (E5) de constitution d'une forme 2D continue dudit environnement à partir de chaque nuage de points 2D projetés, et **en ce que** ladite étape (E6) de comparaison dudit nuage de points 2D à une pluralité de formes de panneaux prédéterminés consiste à comparer ladite forme 2D continue à ladite pluralité de formes de panneaux prédéterminés.

3. Procédé selon la revendication 2, **caractérisé en ce que** ladite étape (E7) de sélection dudit panneau reconnu comprend une étape de minimisation d'une fonction de différence entre chaque forme 2D constituée et lesdites formes prédéterminées.

4. Procédé selon l'une des revendications 1 à 3, **caractérisé en ce que** ladite étape (E7) de sélection comprend en outre la mesure des dimensions du panneau reconnu par un retraitement des données 3D issues du capteur 3D de manière à confirmer ou non la reconnaissance dudit panneau.

5. Procédé selon l'une des revendications 1 à 4, **caractérisé en ce que** ladite étape (E7) de sélection du panneau reconnu comprend en outre le calcul d'une distance, au sens mathématique du terme, entre la forme reconnue et la forme la plus proche suivante et une étape de comparaison de cette distance à un seuil prédéterminé.

6. Système de détection et de lecture automatique des panneaux de signalisation d'une voie ferroviaire comprenant :
- un capteur 3D destiné à être monté sur un véhicule ferroviaire circulant sur ladite voie et configuré pour faire l'acquisition d'un nuage de points 3D de l'environnement de la voie susceptible de loger des panneaux de signalisation,
- un capteur optique (14) destiné à être monté sur un véhicule ferroviaire et configuré pour faire l'acquisition d'une image dudit environnement de ladite voie ferrée susceptible de loger des panneaux de signalisation,
- un module de partitionnement (16a) dudit nuage de points 3D acquis par ledit capteur 3D en une pluralité de tranches s'étendant perpendiculairement à la voie,
- un module de projection (16b) orthogonale des points de chaque tranche sur un plan perpendiculaire à la voie de manière à obtenir un nuage de points 2D dudit environnement de la voie,
- un module de comparaison (16d) dudit nuage de points 2D à une pluralité de formes de panneaux prédéterminés,
- un module de sélection (16e) d'un panneau, dit panneau reconnu, choisi parmi ladite pluralité de panneaux prédéterminés à partir des résultats fournis par le module de comparaison,
- un module de détection (16f), sur ladite image acquise par ladite caméra et correspondant audit nuage de points 3D dont dérive le nuage de points 2D correspondant audit panneau sélectionné, de l'information lumineuse fournie par ledit panneau détecté.

7. Système selon la revendication 6, **caractérisé en ce qu'**il comprend en outre un module de constitution (16c) d'une forme 2D continue dudit environnement de la voie à partir de chaque nuage de points 2D projetés et **en ce que** ledit module de comparaison (16d) est configuré pour comparer ladite forme 2D continue à ladite pluralité de formes de panneaux prédéterminés.

8. Système selon la revendication 7, **caractérisé en ce que** ledit module de sélection (16e) dudit panneau comprend un sous-module de minimisation d'une fonction de différence entre chaque forme 2D constituée et lesdites formes prédéterminées.

9. Système selon l'une des revendications 6 à 8, **caractérisé en ce que** ledit module de sélection (16e) comprend un sous-module de mesure des dimensions du panneau reconnu par un retraitement des données 3D issues du capteur 3D de manière à confirmer ou non la reconnaissance dudit panneau.

10. Système selon l'une des revendications 6 à 9, **caractérisé en ce que** ledit module de sélection (16e) comprend un sous-module de calcul d'une distance, au sens mathématique du terme, entre la forme reconnue et la forme la plus proche suivante et un sous-module de comparaison de cette distance à un seuil prédéterminé.

11. Système selon l'une des revendications 6 à 10, **caractérisé en ce que** ledit capteur 3D est un capteur actif du type lidar ou radar ou un capteur passif du type système d'imagerie stéréoscopique.

12. Véhicule ferroviaire (10) destiné à circuler sur une voie ferrée comprenant une pluralité de panneaux de signalisation, **caractérisé en ce qu'**il comprend un système de détection et de lecture automatique des panneaux de signalisation de ladite voie ferroviaire selon l'une des revendications 6 à 11.
